# FASCICULE DE BREVET EUROPEEN

(11) **EP 3 557 278 B1**
(45) Date de publication et mention de la délivrance du brevet: **13.10.2021**
(21) Numéro de dépôt: 19170395.8
(22) Date de dépôt: 19.04.2019
(51) Int. Cl.: G01S 5/04, G01S 5/06, G01S 5/12

(54) **PROCÉDÉ DE GÉOLOCALISATION D'UN ÉMETTEUR, SYSTÈME DE GÉOLOCALISATION ET PRODUIT PROGRAMME D'ORDINATEUR ASSOCIÉS**
GEOLOKALISIERUNGSVERFAHREN EINES SENDERS, ENTSPRECHENDES GEOLOKALISIERUNGSSYSTEM UND -SOFTWAREPROGRAMM
METHOD FOR GEOLOCATION OF A TRANSMITTER, ASSOCIATED GEOLOCATION SYSTEM AND COMPUTER PROGRAM PRODUCT

(30) Priorité: 19.04.2018 FR 1800342
(43) Date de publication de la demande: 23.10.2019
(73) Titulaire: Thales, 92400 Courbevoie (FR)
(72) Inventeur: HEURGUIER, Dominique, 92622 Gennevilliers Cedex (FR); DELAVEAU, François, 92622 Gennevilliers Cedex (FR); BARBET, Bernard, 92622 Gennevilliers Cedex (FR)
(74) Mandataire: Lavoix

(56) Documents cités:
- US-A1- 2005 052 315
- US-A1- 2008 186 235
- WANG ZHONGHAI ET AL: "A low-cost, near-real-time two-UAS-based UWB emitter monitoring system", IEEE AEROSPACE AND ELECTRONIC SYSTEMS MAGAZINE, IEEE SERVICE CENTER, PISCATAWAY, NJ, US, vol. 30, no. 11, 1 novembre 2015 (2015-11-01), pages 4-11, XP011591394, ISSN: 0885-8985, DOI: 10.1109/MAES.2015.140219 [extrait le 2016-01-06]
- DEHGHAN SEYYED M MEHDI ET AL: "Optimal path planning for DRSSI based localization of an RF source by multiple UAVs", 2014 SECOND RSI/ISM INTERNATIONAL CONFERENCE ON ROBOTICS AND MECHATRONICS (ICROM), IEEE, 15 octobre 2014 (2014-10-15), pages 558-563, XP032709462, DOI: 10.1109/ICROM.2014.6990961

## Description

La présente invention concerne un procédé de géolocalisation d'un émetteur.

La présente invention concerne également un système de géolocalisation et un produit programme d'ordinateur associés. Ce système permet notamment de géolocaliser un émetteur disposé par exemple au sol par au moins deux drones.

On entend par « drone », un engin volant dans l'atmosphère terrestre et pilotable au moins partiellement de manière autonome et/ou distante.

Dans l'état de la technique, il est connu d'utiliser des drones pour géolocaliser un ou plusieurs émetteurs disposés par exemple au sol.

L'émetteur est apte à émettre des signaux radioélectriques.

En analysant les signaux émis par l'émetteur et reçus par au moins deux drones se trouvant suffisamment loin l'un de l'autre, il est généralement possible de déterminer la position exacte de l'émetteur.

Pour ce faire, l'état de la technique propose notamment une technique connue sous l'acronyme anglais TDOA (« Time Différence Of Arrival ») qui utilise la différence des instants de réception par différents drones des signaux radioélectriques de type prédéterminé issue de l'émetteur et les positions connues de ces drones.

Cette technique est par exemple décrite dans les documents Wang Zhonghai et al : « A low-cost, near-reai-time two-UAS-based UWB emitter monitoring system » et Dehghan Seyyed M Mehdi et al : « Optimal path planning for DRSSI based localization of an RF source by multiple UAVs ».

Toutefois, cette technique n'est complètement satisfaisante dans la mesure où l'émission de ces signaux doit se faire dans une large bande pour que l'émetteur soit observable.

Il existe également une technique connue sous l'acronyme anglais FDOA (« Frequency Différence Of Arrival ») qui utilise la différence des fréquences d'arrivée des signaux radioélectriques de type prédéterminé vers des drones différents et les positions connues de ces drones.

Toutefois, cette technique n'est pas non plus satisfaisante car une émission de longue durée est généralement requise pour que l'émetteur soit observable selon cette technique.

Il existe finalement des techniques combinant ces deux techniques mais cela ne permet pas de remédier complètement aux inconvénients précités.

La présente invention a pour but de proposer un procédé de géolocalisation d'un émetteur permettant de déterminer la position de l'émetteur de manière particulièrement précise et ceci, indépendamment du type de signaux émis par l'émetteur.

À cet effet, l'invention a pour objet un procédé de géolocalisation conforme à la revendication 1.

Suivant d'autres aspects avantageux de l'invention, le procédé comprend une ou plusieurs des caractéristiques conformes aux revendications dépendantes de procédé.

L'invention a également pour objet un produit programme d'ordinateur comportant des instructions logicielles qui, lorsque mises en œuvre par un équipement informatique, mettent en œuvre le procédé tel que défini précédemment.

L'invention a également pour objet un système de géolocalisation d'un émetteur comportant deux modules de communication embarqués dans des drones différents et configurés pour mettre en œuvre le procédé tel que décrit précédemment.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'un système de géolocalisation d'un émetteur selon l'invention ; et
- la figure 2 est un organigramme d'un procédé de géolocalisation de l'émetteur de la figure 1, le procédé étant mis en œuvre par le système de la figure 1.

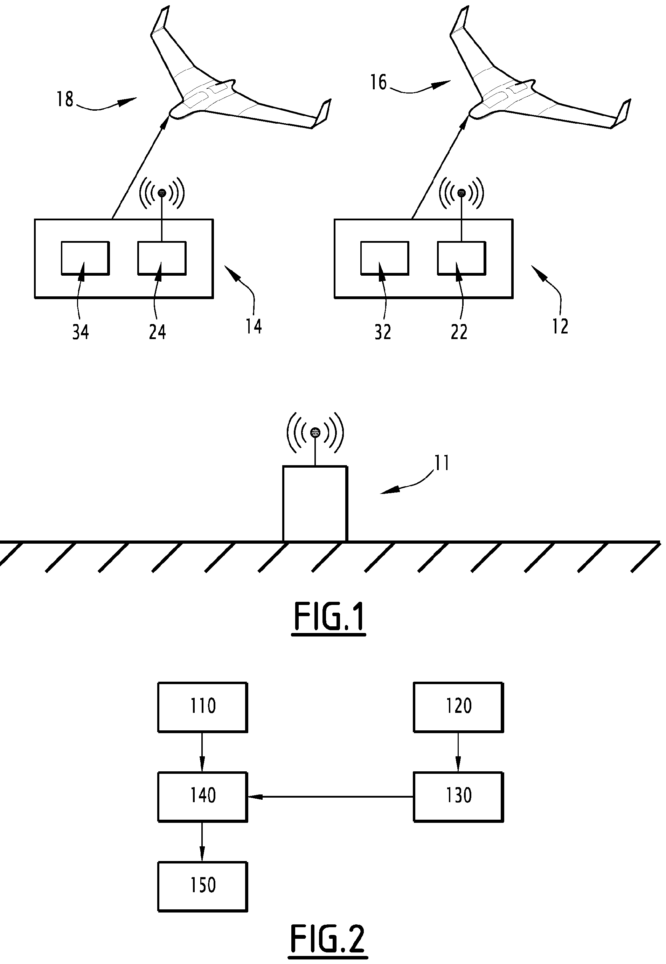

Le système de géolocalisation 10 d'un émetteur 11 selon l'invention est illustré schématiquement sur la figure 1.

L'émetteur 11 est par exemple disposé au sol de façon fixe ou mobile. Il correspond par exemple à une balise d'observation associée à un objet d'intérêt.

L'émetteur 11 est apte à émettre des signaux radioélectriques.

Par ailleurs, de façon optionnelle, parmi les signaux radioélectriques émis par l'émetteur 11, certains signaux correspondent à une ou plusieurs séquences de signal de type connu et prédéterminé qui sont détectables par le système 10 comme cela sera expliqué par la suite. Ces séquences de signal de type connu correspondent par exemple à des séquences d'apprentissage des canaux de synchronisation.

En référence à la figure 1, le système 10 comporte deux modules de communication 12 et 14 embarqués dans des drones différents, respectivement 16 et 18.

Comme mentionné précédemment, on entend par « drone », un engin volant dans l'atmosphère terrestre et pilotable au moins partiellement de manière autonome et/ou distante. Un tel drone est par exemple à voilure fixe ou rotative.

Le drone 16 est dit par la suite drone principal et le drone 18 est dit par la suite drone secondaire.

Chaque module de communication 12, 14 est apte à recevoir des signaux radioélectriques issus de l'émetteur 11 et éventuellement, à envoyer des signaux radioélectriques vers cet émetteur 11.

Les modules de communication 12, 14 sont aptes en outre à établir une liaison de données entre eux qui est configurée pour transmettre des données entre ces modules sous la forme de signaux radioélectriques.

En particulier, chaque module de communication 12, 14 comporte une antenne 22, 24 et une unité de traitement 32, 34.

Chaque antenne 22, 24 est apte à émettre et à recevoir des signaux radioélectriques et comporte au moins un élément aérien. Selon un exemple de réalisation, chaque antenne comporte 22, 24 en outre une pluralité d'antennes élémentaires disposées selon une configuration géométrique prédéterminée sur une surface. Chaque antenne élémentaire est apte à mesurer la puissance, l'amplitude, la fréquence et la phase des signaux radioélectriques reçus.

Dans le cas où chaque antenne 22, 24 comporte plusieurs éléments aériens et une pluralité d'antennes élémentaires, en analysant au minimum les mesures de phase et la configuration géométrique de la disposition des antennes élémentaires, elle est apte à déterminer, par un procédé de goniométrie connu en soi, la direction de la provenance des signaux radioélectriques reçus

Chaque unité de traitement 32, 34 est apte à générer au moins certains des signaux radioélectriques destinés à être émis par l'antenne correspondante 22, 24 et à analyser au moins certains des signaux radioélectriques reçus par cette antenne comme cela sera expliqué par la suite.

En outre, chaque unité de traitement 32, 34 est apte à déterminer la position exacte du drone correspondant 16, 18 en utilisant des signaux radioélectriques issus d'un et de plusieurs systèmes de positionnement par satellites connus également sous le sigle anglais GNSS (pour « Global Navigation Satellite System »).

En variante, chaque unité de traitement 32, 34 est apte à déterminer la position du drone correspondant 16, 18 en utilisant tout autre moyen connu en soi.

Chaque unité de traitement 32, 34 se présente par exemple au moins partiellement sous la forme d'un mini-calculateur muni d'un processeur et d'une mémoire. Cette mémoire est notamment apte à stocker une pluralité de logiciels exécutables par le processeur.

En variante ou en complément, l'unité de traitement 32 se présente au moins partiellement sous la forme d'un ou de plusieurs circuits programmables par exemple de type FPGA (de l'anglais « Field-Programmable Gate Array »).

Finalement, selon un exemple de réalisation, chaque module de communication 12, 14 comporte en outre une horloge interne qui peut être synchronisée avec une horloge de référence par exemple d'un système GNSS ou avec l'horloge de l'autre module de communication 12, 14 via notamment la liaison des données établie entre ces modules.

Le procédé de géolocalisation de l'émetteur 11 mis en œuvre par le système de géolocalisation 10 selon l'invention sera désormais expliqué en référence à la figure 2 présentant un organigramme de ses étapes.

Initialement, les drones 16, 18 volent à proximité de l'émetteur 11, c'est-à-dire dans une zone dans laquelle les antennes 22, 24 de ces drones sont aptes à recevoir au moins certains des signaux radioélectriques émis par l'émetteur 11.

L'émetteur 11 émet par exemple des signaux radioélectriques de manière permanente, comportant éventuellement des séquences de signal de type prédéterminé.

Les drones 16, 18 suivent par exemple une trajectoire prédéterminée qui peut être modifiée lorsque les antennes correspondantes détectent des signaux provenant de l'émetteur 11. Dans ce cas, les drones 16, 18 se mettent en défilement selon une trajectoire prédéterminée autour de l'émetteur 11.

Par ailleurs, les trajectoires de défilement des drones 16, 18 sont choisies de telle sorte que les drones 16, 18 soient séparés l'un de l'autre par une distance significative par rapport aux distances séparant chacun des drones 16, 18 de l'émetteur 11.

Par « distance significative » par rapport à une autre distance, on comprend une distance égale à au moins 10% de cette autre distance.

Lors des étapes initiales 110 et 120 du procédé mises en œuvre par exemple en parallèle par les modules de communication 12, 14 des drones 16, 18, le module de communication 12, 14 correspondant prend une pluralité de mesures.

Chaque pluralité de mesures comprend des mesures de puissances de signaux radioélectriques reçus de l'émetteur 11 et au moins un type de mesures choisi dans un premier groupe consistant en :
- mesures de directions d'arrivée des signaux radioélectriques reçus de l'émetteur ;
- mesures d'instants d'arrivée d'une séquence de signal de type prédéterminé issue de l'émetteur ; et
- mesures de fréquences d'arrivée d'une pluralité de séquences de signal de type prédéterminé issues de l'émetteur.

Les mesures de puissance et de directions d'arrivée sont effectuées en utilisant les antennes 22, 24 correspondantes et éventuellement, les antennes élémentaires de ces antennes. Les mesures de puissance correspondent par exemple à des valeurs connues sous l'acronyme anglais RSSI (« Received Field Strength Indicator »).

Les mesures d'instants d'arrivée et de fréquences d'arrivée sont effectuées en utilisant l'horloge du module de communication correspondant 12, 14.

Par ailleurs, comme décrit précédemment, les signaux radioélectriques émis par l'émetteur 11 et correspondant aux séquences de signal de type prédéterminé sont reconnues par le module de communication correspondant 12, 14 en tant que séquences de ce type ce qui lui permet de déclencher les mesures des instants de leur arrivée et/ou des fréquences de leur arrivée.

Selon un exemple de réalisation, chaque pluralité de mesures comprend l'ensemble des types de mesure du premier groupe.

Lors de l'étape 130 suivante, le module de communication 14 du drone secondaire 18 transmet la pluralité de mesures prise au module de communication 12 du drone principal 16, éventuellement avec sa position actuelle. Cette position est par exemple déterminée par l'unité de traitement 34 de ce drone secondaire 18 en utilisant des signaux issus d'un ou de plusieurs systèmes GNSS.

Lors de l'étape 140 suivante, l'unité de traitement 32 du drone principal 16 analyse la pluralité de mesures prise par ce drone ainsi que la pluralité de mesures transmise par le module de communication 14 du drone secondaire 18, afin de déterminer la position relative de l'émetteur 11 par rapport par exemple au drone principal 16.

Pour ce faire, l'unité de traitement 32 détermine notamment la différence des mesures de puissance prises par les modules de communication 12, 14 aux mêmes instants.

L'unité de traitement 32 détermine également au moins un type de différence choisi dans un deuxième groupe consistant en :
- différence des mesures d'instants d'arrivée prises par les modules de communication 12, 14 et correspondant aux mêmes séquences de signal de type prédéterminé ; et
- différence des mesures de fréquences d'arrivée prises par les modules de communication 12, 14 et correspondant aux mêmes pluralités de séquences de signal de type prédéterminé.

Selon un exemple de réalisation, l'unité de traitement 32 détermine les différences de chaque type du deuxième groupe, lorsque les mesures correspondantes sont disponibles.

Puis, l'unité de traitement 32 utilise l'ensemble des différences déterminées ainsi que la distance séparant les drones 16, 18 pour déterminer la position relative de l'émetteur 11. La distance séparant les drones 16, 18 est déterminée en utilisant les positions connues des deux drones. Comme la position du drone secondaire 18, la position du drone principal 16 est déterminée par l'unité de traitement 32 correspondante à partir d'un ou plusieurs systèmes GNSS ou à partir d'un procédé de géolocalisation alternatif.

La localisation des émetteurs 11 est obtenue par un procédé de localisation hybride exploitant les différentes mesures ainsi que le défilement des drones.

En particulier, en utilisant la différence des mesures de puissance, l'unité de traitement 32 met en œuvre une technique connue sous l'acronyme anglais PDOA (« Power Différence Of Arrival »).

En utilisant la différence des mesures d'instant d'arrivée, l'unité de traitement 32 met ainsi en œuvre une technique connue sous l'acronyme anglais TDOA (« Time Différence Of Arrival »).

En déterminant la différence des mesures de fréquences d'arrivée, l'unité de traitement 32 met ainsi en œuvre une technique connue sous l'acronyme anglais FDOA (« Frequency Différence Of Arrival »).

Finalement, selon un exemple de réalisation, lors de cette étape 140, l'unité de traitement 32 utilise également les éventuelles mesures de directions d'arrivée et met ainsi en œuvre une technique connue de triangulation, notamment si la goniométrie ne délivre que l'azimut ou si l'émetteur est assez éloigné des drones, ou de localisation par intersection d'un modèle de terre avec des éventuelles goniométries en azimut et site.

Lors de l'étape 150 suivante, l'unité de traitement 32 détermine la position absolue de l'émetteur 11 en utilisant la position relative déterminée lors de l'étape 140 et la position connue du drone principal 18.

Bien entendu, les étapes 140 et 150 du procédé selon l'invention peuvent être implémentées par toute autre unité de traitement comme par exemple une unité de traitement disposée à distance de chacun des drones 16, 18. Dans ce cas, lors de l'étape 130, les modules de communication 12, 14 des deux drones transmettent vers cette unité de traitement l'ensemble des mesures prises ainsi que ses positions.

En outre, il doit être compris que le procédé selon l'invention peut être mis en œuvre de manière analogue en relation avec une pluralité d'émetteurs. De plus, le nombre des drones utilisés peut être supérieur à deux ce qui permettra d'améliorer la précision du procédé.

On conçoit alors que l'invention présente un certain nombre d'avantages.

En effet, l'invention permet de mettre en œuvre au moins trois techniques de natures différentes de détermination de la position d'un émetteur et de les combiner. Ceci permet alors de remédier aux inconvénients des techniques TDOA et FDOA dont la mise en œuvre n'est pas toujours possible. En particulier, une telle combinaison permet de déterminer la position de l'émetteur indépendamment du type de signaux transmis par l'émetteur.

Par ailleurs, la combinaison de l'ensemble des techniques précitées permet d'obtenir des résultats particulièrement fiables.

## Revendications

1. Procédé de géolocalisation d'un émetteur (11) de signaux radioélectriques par au moins deux drones (16, 18), chaque drone (16, 18) comportant un module de communication (12, 14) apte à recevoir des signaux radioélectriques issus de l'émetteur (11) ;
le procédé comprenant les étapes suivantes ;
- prise (110, 120) d'une pluralité de mesures par chacun des drones (16, 18) en défilement, chaque pluralité de mesures comprenant des mesures de puissances de signaux radioélectriques reçus de l'émetteur (11) et au moins un type de mesures choisi dans un premier groupe consistant en :
- mesures de directions d'arrivée des signaux radioélectriques reçus de l'émetteur (11) ;
- mesures d'instants d'arrivée d'une séquence de signal de type prédéterminé issue de l'émetteur (11) ; et
- mesures de fréquences d'arrivée d'une pluralité de séquences de signal de type prédéterminé issues de l'émetteur (11) ;
- analyse (140) de l'ensemble des mesures prises et détermination de la position relative de l'émetteur (11) par rapport à l'un des drones (16, 18) ;
- détermination (150) de la position absolue de l'émetteur (11) en fonction de ladite position relative et de la position absolue du drone correspondant (16, 18) ;
**caractérisé en ce que** l'étape (140) d'analyse de l'ensemble des mesures comprend la détermination de la différence des mesures de puissance prises par les drones différents (16, 18) aux mêmes instants ;
l'étape (140) d'analyse de l'ensemble des mesures comprenant en outre :
la détermination d'au moins un type de différence choisi dans un deuxième groupe consistant en :
- différence des mesures d'instants d'arrivée prises par les drones différents (16, 18) et correspondant aux mêmes séquences de signal de type prédéterminé ; et
- différence des mesures de fréquences d'arrivée prises par les drones différents (16, 18) et correspondant aux mêmes pluralités de séquences de signal de type prédéterminé ;
ou/et
la mise en œuvre d'une technique de triangulation en utilisant les mesures de directions d'arrivée prises par les drones différents (16, 18) aux mêmes instants.

2. Procédé selon la revendication 1, dans lequel l'étape (110, 120) de prise d'une pluralité de mesures par chacun des drones (16, 18) comprend la prise de chaque type de mesure du premier groupe et l'étape (140) d'analyse de l'ensemble des mesures comprend la détermination de chaque type de différence du deuxième groupe.

3. Procédé selon l'une quelconque des revendications précédentes, dans lequel les modules de communication (12, 14) des drones (16, 18) sont aptes en outre à établir une liaison de données configurée pour transmettre des données entre ces modules de communication (12, 14) sous la forme de signaux radioélectriques.

4. Procédé selon la revendication 3, comprenant en outre une étape (130) de transmission via la liaison de données de la pluralité de mesures prises par l'un des drones (18), dit drone secondaire, vers l'autre drone (16), dit drone principal ;
l'étape (140) d'analyse de l'ensemble des mesures prises étant mise en œuvre par le drone principal (16).

5. Procédé selon l'une quelconque des revendications précédentes, dans lequel chacun des drones (16, 18) comporte en outre une horloge synchronisée avec une horloge de référence ou avec l'horloge de l'autre drone (16, 18).

6. Produit programme d'ordinateur comportant des instructions logicielles qui, lorsque mises en œuvre par les deux modules de communication (12,14) du système selon la revendication 7, mettent en œuvre le procédé selon l'une quelconque des revendications précédentes.

7. Système de géolocalisation (10) d'un émetteur (11) comportant deux modules de communication (12, 14) embarqués dans des drones différents (16, 18) et configurés pour mettre en œuvre le procédé selon l'une quelconque des revendications 1 à 5.

## Patentansprüche

1. Verfahren zur Geolokalisierung eines Senders (11) von Funksignalen durch mindestens zwei Drohnen (16, 18), wobei jede Drohne (16, 18) ein Kommunikationsmodul (12, 14) aufweist, das geeignet ist, Funksignale von dem Sender (11) zu empfangen;
wobei das Verfahren die folgenden Schritte umfasst;
- Aufnehmen (110, 120) einer Vielzahl von Messungen durch jede der vorbeifliegenden Drohnen (16, 18), wobei jede Vielzahl von Messungen Messungen von Funksignalstärken, die von dem Sender (11) empfangen werden, und mindestens eine Art von Messung umfasst, die aus einer ersten Gruppe ausgewählt wird, bestehend aus:
- Messungen der Ankunftsrichtungen der vom Sender (11) empfangenen Funksignale;
- Messungen der Ankunftszeiten einer vom Sender (11) ausgegebenen Signalfolge vorbestimmter Art; und
- Messungen der Ankunftsfrequenzen einer Vielzahl von vom Sender (11) ausgegebenen Signalfolgen einer vorbestimmten Art;
- Analysieren (140) der Gesamtheit der durchgeführten Messungen und Bestimmen der relativen Position des Senders (11) in Bezug auf eine der Drohnen (16, 18);
- Bestimmen (150) der absoluten Position des Senders (11) in Abhängigkeit von der relativen Position und der absoluten Position der entsprechenden Drohne (16, 18);
**dadurch gekennzeichnet, dass** der Schritt (140) des Analysierens des Satzes von Messungen das Bestimmen der Differenz der Messungen der Signalstärke umfasst, die von den verschiedenen Drohnen (16, 18) zu denselben Zeitpunkten vorgenommen werden;
wobei der Schritt (140) des Analysierens des Satzes von Messungen weiterhin umfasst:
Bestimmen mindestens einer Art von Differenz, ausgewählt aus einer zweiten Gruppe, bestehend aus:
- Differenz der Ankunftszeitmessungen, die von den verschiedenen Drohnen (16, 18) vorgenommen werden und denselben Signalfolgen vorbestimmter Art entsprechen; und
- Differenz der Ankunftsfrequenzmessungen, die von den verschiedenen Drohnen (16, 18) vorgenommen werden und derselben Vielzahl von Signalfolgen vorgegebener Art entsprechen;
oder/und
Durchführen einer Triangulationstechnik unter Verwendung der Messungen der Ankunftsrichtungen, die von den verschiedenen Drohnen (16, 18) zu denselben Zeitpunkten vorgenommen werden.

2. Verfahren nach Anspruch 1, bei dem der Schritt (110, 120) des Vornehmens einer Vielzahl von Messungen durch jede der Drohnen (16, 18) das Vornehmen jeder Art von Messung der ersten Gruppe umfasst und der Schritt (140) des Analysierens aller Messungen das Bestimmen jeder Art von Differenz der zweiten Gruppe umfasst.

3. Verfahren nach einem beliebigen der vorhergehenden Ansprüche, bei dem die Kommunikationsmodule (12, 14) der Drohnen (16, 18) außerdem geeignet sind, eine Datenverbindung herzustellen, die ausgebildet ist, Daten zwischen diesen Kommunikationsmodulen (12, 14) in Form von Funksignalen zu übertragen.

4. Verfahren nach Anspruch 3, das außerdem einen Schritt (130) des Übertragens der Vielzahl von Messungen, die von einer der Drohnen (18), genannt sekundäre Drohne, vorgenommen werden, über die Datenverbindung an die andere Drohne (16), genannt Hauptdrohne, umfasst;
wobei der Schritt (140) des Analysierens der Gesamtheit der vorgenommenen Messungen von der Hauptdrohne (16) durchgeführt wird.

5. Verfahren nach einem beliebigen der vorhergehenden Ansprüche, bei dem jede der Drohnen (16, 18) ferner einen Taktgeber aufweist, der mit einem Referenztaktgeber oder mit dem Taktgeber der anderen Drohne (16, 18) synchronisiert ist.

6. Computerprogrammprodukt, das Softwarebefehle aufweist, die, wenn sie von den beiden Kommunikationsmodulen (12, 14) des Systems nach Anspruch 7 ausgeführt werden, das Verfahren nach einem der vorhergehenden Ansprüche durchführen.

7. Geolokalisierungssystem (10) eines Senders (11), das zwei Kommunikationsmodule (12, 14) aufweist, die in verschiedenen Drohnen (16, 18) mitgeführt werden und ausgebildet sind, das Verfahren nach einem beliebigen der Ansprüche 1 bis 5 durchzuführen.

## Claims

1. A geo-localization method of a transmitter (11) for wireless signals by at least two drones (16, 18), each drone (16, 18) including a communication module (12, 14) able to receive wireless signals from the transmitter (11);
the method comprising the following steps:
- acquiring (110, 120) a plurality of measurements by each of the drones (16, 18) on overflight, each plurality of measurements comprising power measurements of wireless signals received from the transmitter (11) and at least one measurement type chosen from a first group consisting of:
- direction of arrival measurements of the wireless signals received from the transmitter (11);
- time of arrival measurements of a signal sequence of predetermined type from the transmitter (11); and
- frequency of arrival measurements of a plurality of signal sequences of predetermined type from the transmitter (11);
- analyzing (140) the acquired measurements and determining the relative position of the transmitter (11) with respect to one of the drones (16, 18);
- determining (150) the absolute position of the transmitter (11) as a function of said relative position and the absolute position of the corresponding drone (16, 18);
**characterized in that** the step (140) for analyzing the measurements comprises determining the difference in power measurements taken by the different drones (16, 18) at the same moments;
the step (140) for analyzing the measurements further comprising:
determining at least one type of difference chosen from a second group consisting of:
- difference in time of arrival measurements taken by the different drones (16, 18) and corresponding to the same signal sequences of predetermined type; and
- difference in frequency of arrival measurements taken by the different drones (16, 18) and corresponding to the same pluralities of signal sequences of predetermined type;
or/and
implementing a triangulation technique by using the direction of arrival measurements acquired by the various drones (16, 18) at the same moments.

2. The method according to claim 1, wherein the step (110, 120) for acquiring a plurality of measurements by each of the drones (16, 18) comprises acquiring each type of measurement from the first group and the step (140) of analyzing the measurements comprises determining each type of difference of the second group.

3. The method according to any one of the preceding claims, wherein the communication modules (12, 14) of the drones (16, 18) are further able to establish a data link configured to transmit data between these communication modules (12, 14) in the form of wireless signals.

4. The method according to claim 3, further comprising a step (130) for sending, via the data link, the plurality of measurements acquired by one of the drones (18), called secondary drone, to the other drone (16), called primary drone;
the step (140) for analyzing the measurements being carried out by the primary drone (16).

5. The method according to any one of the preceding claims, wherein each of the drones (16, 18) further includes a clock synchronized with a reference clock or with the clock of the other drone (16, 18).

6. A computer program product comprising software instructions which, when implemented by the two communication modules (12, 14) of the system according to claim 7, carry out the method according to any one of the preceding claims.

7. A geo-localization system (10) for a transmitter (11) including two communication modules (12, 14) on board different drones (16, 18) and configured to carry out the method according to any one of claims 1 to 5.
